# EUROPÄISCHE PATENTSCHRIFT

(11) **EP 1 221 655 B1**
(45) Veröffentlichungstag und Bekanntmachung des Hinweises auf die Patenterteilung: **08.06.2016**
(21) Anmeldenummer: 01130950.7
(22) Anmeldetag: 28.12.2001
(51) Int. Cl.: G06F 11/26, G06F 11/36

(54) **Integrierte Schaltung**
Integrated circuit
Circuit intégré

(30) Priorität: 05.01.2001 DE 10100344
(43) Veröffentlichungstag der Anmeldung: 10.07.2002
(73) Patentinhaber: Infineon Technologies AG, 85579 Neubiberg (DE)
(72) Erfinder: Mayer, Albrecht, 82041 Deisenhofen (DE)
(74) Vertreter: Jannig, Peter

(56) Entgegenhaltungen:
- EP-A- 0 762 279
- US-A- 4 527 234
- US-A- 5 898 862
- US-A- 6 094 729
- US-A- 6 167 536

## Beschreibung

Die vorliegende Erfindung betrifft eine Vorrichtung gemäß dem Oberbegriff des Patentanspruchs 1.

Integrierte Schaltungen weisen vor allem aufgrund der immer größer werdenden Komplexität und der immer höheren Geschwindigkeit, mit welcher diese arbeiten, das Problem auf, daß die Benutzer der integrierten Schaltungen, genauer gesagt die Benutzer der die integrierten Schaltungen enthaltenden Bausteine häufig nicht mehr in der Lage sind, die Ursachen für eine nicht ordnungsgemäße Funktion der integrierten Schaltungen und/oder der die integrierten Schaltungen enthaltenden Systeme zu erkennen und zu beheben.

Für besonders komplexe integrierten Schaltungen wie beispielsweise Mikroprozessoren und Mikrocontroller wurden aus diesem Grund sogenannte Emulatoren entwickelt, mit Hilfe welcher sich während des normalen Betriebes einer integrierten Schaltung interne Zustände und Abläufe in der integrierten Schaltung (beispielsweise Registerinhalte, Speicherinhalte, und/oder über interne oder externe Leitungen oder Busse übertragene Adressen, Daten, Steuersignale etc.) beobachten und wunschgemäß verändern lassen.

Bei der Emulation einer integrierten Schaltung wird diese (der diese enthaltende Baustein) im allgemeinen aus dem diese enthaltenden System entfernt und durch eine spezielle Schaltung ersetzt, wobei diese spezielle Schaltung die zu testenden integrierte Schaltung selbst (wenn die aus dem System entnommene integrierte Schaltungen in die spezielle Schaltung eingesetzt wird) oder eine besondere Version der integrierten Schaltung (eine sogenannte Bond-Out-Version, welche zusätzliche Anschlüsse zur Beobachtung interner Zustände oder Vorgänge aufweist) enthält.

Eine solche Emulation weist eine ganze Reihe von Nachteilen auf.

Einer der Nachteile besteht darin, daß das Entnehmen der integrierten Schaltung aus dem System und das Ersetzen derselben durch eine wie auch immer geartete Schaltung entweder überhaupt nicht möglich ist (beispielsweise wenn die zu emulierende integrierte Schaltung eingelötet oder schlecht zugänglich oder von einem Abschirmkäfig umgeben ist), oder aber zumindest sehr aufwendig ist.

Ein weiterer Nachteil besteht darin, daß sich das System während der Emulation der zu emulierenden integrierten Schaltung aufgrund der hierfür erforderlichen Veränderungen häufig nicht mehr exakt so wie im normalen Betrieb verhält. Dies hat zwei Ursachen: einerseits, weil die zu emulierende integrierte Schaltung durch eine spezielle Schaltung ersetzt wird, und andererseits, weil die spezielle Schaltung meistens nicht mehr die zu emulierende integrierte Schaltung selbst, sondern eine besondere Version (die bereits erwähnte Bond- Out-Version) der integrierten Schaltung enthält.

Darüber hinaus sind die Entwicklung und Herstellung einer Bond-Out-Version von integrierten Schaltungen sehr aufwendig und teuer. Ferner kommen Bond-Out-Versionen häufig erst später auf den Markt als die Standard-Versionen der integrierten Schaltungen.

Zur Vermeidung dieser Nachteile behilft man sich mittlerweile damit, daß man insbesondere komplexere integrierte Schaltungen standardmäßig mit einem sogenannten On-Chip-Debug- Support-Modul (OCDS-Modul) ausstattet. Die Integration eines OCDS-Moduls in die integrierte Schaltung macht diese jedoch erheblich größer und teurer als es ohne OCDS-Modul der Fall wäre und läuft dem Bestreben, integrierte Schaltungen immer noch kleiner und noch billiger herzustellen, entgegen. Dies ist besonders schmerzlich, weil integrierte Schaltungen mit OCDS-Modul im allgemeinen nicht ohne OCDS-Modul angeboten werden, und weil das OCDS-Modul einer integrierten Schaltung allenfalls für die Systementwicklung, nicht aber für den normalen Betrieb der integrierten Schaltung benötigt wird.

Diese Nachteile sind noch ausgeprägter, wenn das OCDS-Modul nicht nur Breakpoint-Funktionalität besitzt, sondern zusätzlich Mittel enthält, durch welche auch der Programmfluß und Datenzugriffe beobachtet werden können (Trace-Funktion).

US5898862 offenbart eine integrierte Schaltung mit einem ersten Schaltungsteil und einem für die Emulation des ersten Schaltungsteils erforderlichen zweiten Schaltungsteil.

Der vorliegenden Erfindung liegt die Aufgabe zugrunde, eine Möglichkeit zu finden, durch welche sich auf einfache Weise die Voraussetzung dafür schaffen läßt, eine integrierte Schaltung unter allen Umständen einfach und zuverlässig emulieren zu können.

Diese Aufgabe wird erfindungsgemäß durch die in Patentanspruch 1 beanspruchte integrierte Schaltung, d.h. dadurch gelöst
- daß die integrierte Schaltung einen ersten Schaltungsteil und einen für die Emulation des ersten Schaltungsteils erforderlichen oder hilfreichen zweiten Schaltungsteil umfaßt, bzw.
- daß zum Herstellen der integrierten Schaltung Belichtungsmasken verwendet werden, auf welchen sich jeweils Muster zur Herstellung eines ersten Schaltungsteils der integrierten Schaltung, und Muster zur Herstellung eines zweiten Schaltungsteils der integrierten Schaltung befinden, und daß der zur Herstellung des zweiten Schaltungsteils dienende Teil der Belichtungsmasken bei der Herstellung einer ersten Variante der integrierten Schaltung abgedeckt wird, und bei der Herstellung einer zweiten Variante der integrierten Schaltung unbedeckt bleibt.

Ein den genannten zweiten Schaltungsteil enthaltender Baustein ist ein Baustein, der nicht aus dem diesen enthaltenden System herausgenommen und durch eine spezielle Schaltung ersetzt werden muß, um emuliert zu werden. Die Emulation eines solchen Bausteins läßt sich daher unter allen Umständen denkbar einfach und zuverlässig durchführen.

Ein den ersten Schaltungsteil und den zweiten Schaltungsteil enthaltender (emulierbarer) Baustein ist überraschender Weise auch nicht größer als ein nur den ersten Schaltungsteil enthaltender (nicht emulierbarer) Baustein. Die Größe eines eine integrierte Schaltung enthaltenden Bausteins, genauer gesagt die Größe des Gehäuses desselben hängt nämlich schon lange nicht mehr von der Größe der integrierten Schaltung ab. Entscheidend für die Größe ist vielmehr die Anzahl der Ein- und/oder Ausgabeanschlüsse des Bausteins und der gegenseitige Abstand, den diese Ein- und/oder Ausgabeanschlüsse mindestens aufweisen müssen, um noch mit zugeordneten Kontaktstellen verbunden werden zu können. Im allgemeinen kann insbesondere bei komplexeren Bausteinen wie Mikroprozessoren, Mikrocontrollern, etc. eine darin enthaltene integrierte Schaltung ohne eine damit einhergehende Vergrößerung des Bausteins vergrößert werden.

Unabhängig hiervon ist es auf denkbar einfache Weise möglich, eine emulierbare und eine nicht emulierbare Version des Bausteins herzustellen. Man entwickelt eine emulierbare Version des Bausteins und läßt bei der Herstellung der nicht emulierbaren Version des Bausteins einfach den zweiten Schaltungsteil weg.

Das Weglassen des zweiten Schaltungsteils kann dadurch geschehen, daß bei der Baustein-Herstellung immer mit einer Belichtungsmaske für den emulierbaren Baustein gearbeitet wird, und daß zur Herstellung eines nicht emulierbaren Bausteins einfach der die Muster für den zweiten Schaltungsteil enthaltende Teil der Belichtungsmaske abgedeckt wird.

Bei einem so aufgebauten und so hergestellten Baustein weisen die emulierbare Version und die nicht emulierbare Version weder äußerlich noch im Verhalten Unterschiede auf, so daß in dem den Baustein enthaltenden System wahlweise ein emulierbarer oder ein nicht emulierbarer Baustein eingesetzt werden kann.

Durch eine wie beansprucht aufgebaute integrierte Schaltung und durch eine wie beansprucht erfolgende Herstellung derselben läßt sich auf einfache Weise die Voraussetzung dafür schaffen, eine integrierte Schaltung unter allen Umständen einfach und zuverlässig emulieren zu können.

Vorteilhafte Weiterbildungen der Erfindung sind den Unteransprüchen, der nachfolgenden Beschreibung und den Figuren entnehmbar.

Die Erfindung wird nachfolgend anhand von Ausführungsbeispielen unter Bezugnahme auf die Figuren näher beschrieben. Es zeigen
- Figur 1: ein erstes Ausführungsbeispiel einer ersten Version eines im folgenden näher beschriebenen Bausteins,
- Figur 2: ein zweites Ausführungsbeispiel der ersten Version des im folgenden näher beschriebenen Bausteins,
- Figur 3: eine zweite Version der in den Figuren 1 und 2 gezeigten Bausteine,
- Figur 4: eine Belichtungsmaske zur Herstellung der in den Figuren 1 bis 3 gezeigten Bausteine, und
- Figur 5: die Belichtungsmaske gemäß Figur 4 in einem teilweise abgedeckten Zustand.

Bei der im folgenden beschriebenen integrierten Schaltung handelt es sich um einen Mikroprozessor oder Mikrocontroller. Es sei jedoch bereits an dieser Stelle darauf hingewiesen, daß sich die nachfolgend erläuterten Besonderheiten der beschriebenen integrierten Schaltung auch bei beliebigen anderen integrierten Schaltungen vorsehen lassen, bei denen ein Bedarf besteht, deren Funktionalität und/oder Leistungsfähigkeit bei Bedarf zu erweitern.

Die beschriebene integrierte Schaltung zeichnet sich dadurch aus, daß sie einen ersten Schaltungsteil und einen für die Emulation des ersten Schaltungsteils erforderlichen oder hilfreichen zweiten Schaltungsteil umfaßt.

Der erste Schaltungsteil enthält die Schaltung, die durch die integrierte Schaltung eigentlich realisiert werden soll, ist im betrachteten Beispiel also der Mikroprozessor oder Mikro-controller; der zweite Schaltungsteil enthält "nur" zur Emulation des ersten Schaltungsteils erforderliche oder hilfreiche Komponenten wie beispielsweise
- eine im allgemeinen als Breakpoint-Logik oder Watchpoint-Logik bezeichnete Logik zur Einstellung und der Überwachung des Erreichens bestimmter Bedingungen im ersten Schaltungsteil (beispielsweise des Zugriffs auf eine bestimmte Adresse, des Lesens und/oder Schreibens und/oder der Verwendung bestimmter Daten, der Ausführung eines bestimmten Befehls, des Auftreten eines bestimmten Steuersignals, etc.),
- einen sogenannten Trace-Speicher, in welchem fortlaufend interessierende Speicher- oder Registerinhalte, Daten, Adressen und/oder Steuersignale, die innerhalb eines definierbaren Zeitfensters im ersten Schaltungsteil auftreten, gespeichert werden,
- eine Kompressioneinheit zur Komprimierung der in den Trace-Speicher einzuschreibenden und/oder der aus dem Trace-Speicher auszugebenden Daten, und/oder
- zusätzliche Speicher, genauer gesagt sogenannte Overlay-Speicher, welche bei Bedarf im ersten Halbleiter-Chip enthaltene Festspeicher (ROMs) oder Speicher, deren Inhalt nur aufwendig zu verändern ist (Flash-Speicher, EPROMS, EEPROMS, etc.), ersetzen können.

Der Trace-Speicher, den der zweite Schaltungsteil vorzugsweise enthält, ist vorzugsweise als zirkulärer Puffer ausgebildet und
- zeichnet permanent vorzugsweise (beispielsweise unter Verwendung eines Multiplexers) auswählbare Daten, Adressen, und/oder Steuersignale auf, und
- unterbricht (vorzugsweise mit einem einstellbaren Nachlauf) die Aufzeichnung bei Erreichen eines eingestellten Breakpoints oder Watchpoints.

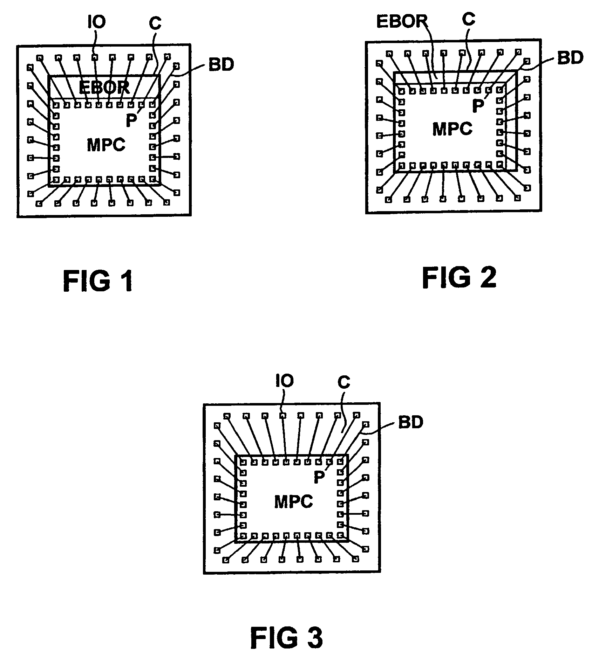

Ein Baustein, der eine aus einem ersten Schaltungsteil und einem zweiten Schaltungsteil bestehende integrierte Schaltung enthält, ist in Figur 1 gezeigt.

Die in der Figur 1 gezeigte Anordnung enthält
- einen Halbleiter-Chip C mit
   - einen dem vorstehend beschriebenen ersten Schaltungsteil entsprechenden ersten Schaltungsteil MPC,
   - einen mit dem ersten Schaltungsteil MPC verbundenen und dem vorstehend beschriebenen zweiten Schaltungsteil entsprechenden zweiten Schaltungsteil EBOR, und
   - dem ersten Schaltungsteil MPC zugeordnete Kontaktstellen (Pads) P,
- Ein- und/oder Ausgabeanschlüsse IO zur Verbindung des Bausteins mit anderen Komponenten des den Baustein enthaltenden Systems, und
- Bonddrähte BD zur Verbindung der Ein- und/oder Ausgabeanschlüsse IO mit den Pads P.

Ein weiteres Ausführungsbeispiel eines Bausteins, der eine aus einem ersten Schaltungsteil und einem zweiten Schaltungsteil bestehende integrierte Schaltung enthält, ist in Figur 2 gezeigt.

Der in der Figur 2 gezeigte Baustein entspricht nahezu vollständig dem in der Figur 1 gezeigten Baustein; gleiche Bezugszeichen bezeichnen einander entsprechende Elemente. Unterschiedlich ist nur die Form des zweiten Schaltungsteils EBOR.

Es dürfte einleuchten, daß keine Einschränkung darauf besteht, die Formen der Schaltungsteile MPC und EBOR (die Formen der die Schaltungsteile MPC und EBOR enthaltenden Bereiche des Halbleiter-Chips C) und die Relativlage der Schaltungsteile MPC und EBOR wie in den Figuren 1 und 2 gezeigt zu wählen. Prinzipiell können die Formen der Schaltungsteile MPC und deren Relativlage unabhängig voneinander frei gewählt werden.

In beiden Fällen, d.h. sowohl beim Baustein gemäß Figur 1, als auch beim Baustein gemäß Figur 2 weist der zweite Schaltungsteil EBOR keine Kontaktstellen auf, die mit den Ein- und/oder Ausgabeanschlüssen IO des Bausteins verbunden sind. Falls zwischen dem zweiten Schaltungsteil EBOR und außerhalb des Bausteins vorgesehenen Einrichtungen eine Kommunikation erforderlich ist, erfolgt diese über den ersten Schaltungsteil (über die diesem zugeordneten Pads P und die damit verbundenen Ein- und/oder Ausgabeanschlüsse IO), und zwar vorzugsweise über eine auch anderweitig verwendete oder verwendbare Schnittstelle wie beispielsweise über ein JTAG- oder ein NEXUS-Interface. Das Vorsehen des zweiten Schaltungsteils hat daher keine oder jedenfalls nicht zwangsläufig eine Erhöhung der Anzahl der Ein- und/oder Ausgabeanschlüsse des Bausteins zur Folge. Bei Bedarf kann der zweite Schaltungsteil EBOR aber auch eigene Kontaktstellen zur Verbindung mit außerhalb des Bausteins vorgesehenen Einrichtungen aufweisen.

Unabhängig von alledem erweist sich als vorteilhaft, wenn der erste Schaltungsteil und der zweite Schaltungsteil so miteinander verschaltet sind, daß ein Weglassen des zweiten Schaltungsteils keine Auswirkungen auf das Verhalten des ersten Schaltungsteils hat.

Dann kann aus den in den Figuren 1 und 2 gezeigten emulierbaren Baustein-Versionen einfach durch Weglassen des zweiten Schaltungsteils EBOR eine "normale", nicht emulierbare Baustein-Version geschaffen werden.

Hierbei erweist es sich als vorteilhaft, wenn der zweite Schaltungsteil EBOR so angeordnet ist, daß sich durch ein Weglassen desselben der Halbleiter-Chip C verkleinern läßt.

Diese Möglichkeit besteht insbesondere dann, wenn wie in den in den Figuren 1 und 2 gezeigten Beispielen
- der zweite Schaltungsteil EBOR am Rand des Halbleiter-Chips C vorgesehen ist, und
- die Pads P innerhalb des vom ersten Schaltungsteil MPC belegten Bereiches des Halbleiter-Chips C vorgesehen sind.

Eine keinen zweiten Schaltungsteil aufweisende Baustein-Version ist in Figur 3 gezeigt.

Die in der Figur 3 gezeigte Baustein-Version enthält keinen zweiten Schaltungsteil EBOR und weist einen entsprechend kleineren Halbleiter-Chip C auf, stimmt aber ansonsten mit den in den Figuren 1 und 2 gezeigten Baustein-Versionen überein.

Insbesondere weisen die in den Figuren 1 und 2 gezeigten emulierbaren Baustein-Versionen und die in der Figur 3 gezeigte nicht emulierbare Baustein-Version
- die selben äußeren Abmessungen,
- die selbe Lage und Belegung der Ein- und/oder Ausgabeanschlüsse, und
- exakt das selbe Verhalten
auf.

Die emulierbare Baustein-Version ist nicht größer als die nicht emulierbare Baustein Version. Die nicht emulierbare Baustein Version kann, obgleich sie einen kleineren Halbleiter-Chip als die emulierbare Baustein-Version enthalten kann, nicht kleiner gemacht werden. Bei komplexen integrierten Schaltungen wird die Größe eines diese enthaltenden Bausteins nicht durch die Größe des Halbleiter-Chips C, sondern durch die Anzahl, die Lage, und die minimal möglichen Abstände der Ein- und/oder Ausgabeanschlüsse IO bestimmt.

Aufgrund der vorstehend genannten Umstände und ferner aufgrund der Möglichkeit, den Halbleiter-Chip C bei einem nicht emulierbaren Baustein kleiner zu machen als bei einer emulierbaren Baustein-Version, entstehen durch die mögliche Integration von für die Emulation des Bausteins erforderlichen oder hilfreichen Komponenten in den Baustein (durch die Integration des zweiten Schaltungsteils in den Baustein) keinerlei Nachteile: die nicht emulierbare Baustein-Version ist nicht größer und/oder teurer, als es für den normalen Einsatz (den Einsatz im fertig entwickelten und fehlerfrei arbeitenden System) unbedingt erforderlich ist.

Die emulierbare Baustein-Version und die nicht emulierbare Baustein-Version lassen sich besonders einfach herstellen, wenn zum Herstellen der integrierten Schaltung Belichtungsmasken verwendet werden, die zur Herstellung einer emulierbaren Baustein Version ausgelegt sind, also Muster für den ersten Schaltungsteil und Muster für den zweiten Schaltungsteil enthalten, und daß der zur Herstellung des zweiten Schaltungsteils dienende Teil der Belichtungsmasken bei der Herstellung der nicht emulierbaren Variante der integrierten Schaltung abgedeckt wird, und bei der Herstellung der emulierbaren Variante der integrierten Schaltung unbedeckt bleibt.

Dies ist besonders einfach möglich, wenn der erste Schaltungsteil MPC und der zweite Schaltungsteil EBOR in einander nicht überlappenden und nicht ineinander verschachtelten, also nebeneinander liegenden Bereichen vorgesehen sind.

Dann kann das gegebenenfalls erforderliche Abdecken des das Muster für den zweiten Schaltungsteil tragenden Teils der Belichtungsmasken einfach durch eine entsprechende Veränderung der Öffnung einer vor oder hinter der jeweiligen Belichtungsmaske vorgesehenen Blende bewerkstelligt werden.

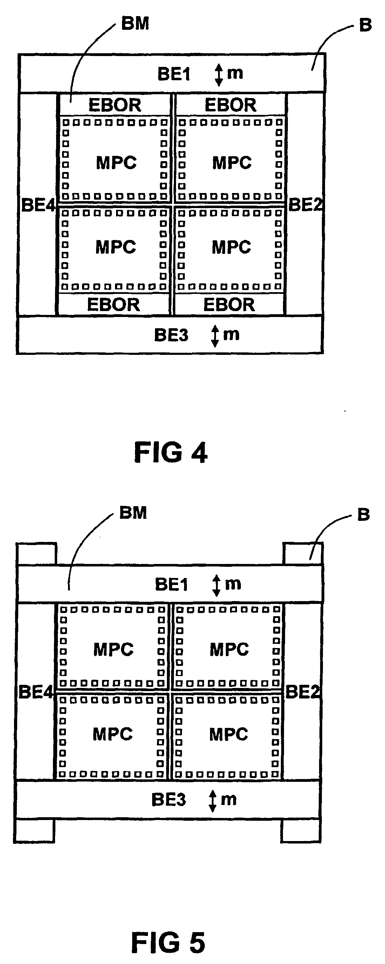

Dies ist beispielhaft in den Figuren 4 und 5 veranschaulicht.

Die Figuren 4 und 5 zeigen eine Belichtungsmaske BM, und eine vor oder hinter der Belichtungsmaske vorgesehene Blende B, wobei
- die Belichtungsmaske BM Muster für den ersten Schaltungsteil MPC und den zweiten Schaltungsteil EBOR von vier integrierten Schaltungen trägt, und
- die Blende B aus mehreren Elementen BE1 bis BE4 besteht, die zumindest teilweise relativ zueinander bewegbar sind.

Im betrachteten Beispiel sind die Blendenelemente BE1 und BE3 längs der in den Figuren 4 und 5 durch Doppelpfeile m bezeichneten Richtung verschiebbar.

Bei der in der Figur 4 gezeigten Darstellung sind die Blendenelemente BE1 und BE3 so eingestellt, daß sowohl die Muster für die ersten Schaltungsteile als auch die Muster für die zweiten Schaltungsteile unbedeckt sind, also emulierbare Bausteine hergestellt werden können.

Aus der in der Figur 4 gezeigten Stellung der Blendenelemente können diese so verschoben werden, daß die Muster für die zweiten Schaltungsteile von ihnen bedeckt werden. Im betrachteten Beispiel geschieht die dadurch, daß die Blendenelemente BE1 und BE3 zueinander hin geschoben werden.

Das Ergebnis dieses Vorganges ist in Figur 5 veranschaulicht. Hier sind die Blendenelemente BE1 und BE3 so eingestellt, daß sie die Muster für die zweiten Schaltungsteile bedecken, also nicht emulierbare Bausteine hergestellt werden können.

Es dürfte einleuchten, daß je nach der Form und der Anordnung des zweiten Schaltungsteils anders geformte und/oder aufgebaute Blenden und/oder andere Bewegungen der Blendenelemente erforderlich sein können, um die Muster für den zweiten Schaltungsteil wahlweise abzudecken oder unbedeckt zu lassen.

Damit können emulierbare Bausteine und nicht emulierbare Bausteine unter Verwendung von ein und denselben Belichtungsmasken hergestellt werden.

Wie vorstehend bereits angedeutet wurde, ist ein wie vorstehend beschrieben ausgebildeter und angeordneter zweiter Schaltungsteil nicht nur zum Emulieren des ersten Schaltungsteils verwendbar. Er kann zusätzlich oder alternativ auch beliebige andere Funktionen erfüllen, beispielsweise zusätzlichen Speicher, einen A/D-Wandler, eine Kryptographie-Einheit und/oder beliebige andere Komponenten für den ersten Schaltungsteil zur Verfügung stellen.

## Patentansprüche

1. Integrierte Schaltung mit einem ersten Schaltungsteil (MPC) und einem für die Emulation des ersten Schaltungsteils erforderlichen oder hilfreichen zweiten Schaltungsteil (EBOR). und ein Baustein, der die integrierte Schaltung enthält,
**dadurch gekennzeichnet,**
**daß** der zweite Schaltungsteil (EBOR) keine Kontaktstellen aufweist, die mit Ein- und/oder Ausgabeanschlüssen der integrierten Schaltung verbunden sind, wobei eine gegebenenfalls erforderliche Kommunikation des zweiten Schaltungsteils (EBOR) mit außerhalb des Bausteins vorgesehenen Einrichtungen über den ersten Schaltungsteil (MPC) erfolgt.

2. Integrierte Schaltung nach Anspruch 1,
**dadurch gekennzeichnet,**
**daß** der zweite Schaltungsteil (EBOR) innerhalb der integrierten Schaltung so angeordnet ist, daß ein Weglassen desselben durch ein Abdecken des entsprechenden Teils von zur Herstellung der integrierten Schaltung verwendeten Belichtungsmasken (BM) bewerkstelligbar ist.

3. Integrierte Schaltung nach einem der vorhergehenden Ansprüche,
**dadurch gekennzeichnet,**
**daß** der erste Schaltungsteil (MPC) und der zweite Schaltungsteil (EBOR) in einander nicht überlappenden Bereichen eines die integrierte Schaltung enthaltenden Halbleiter-Chips (C) vorgesehen sind.

4. Integrierte Schaltung nach einem der vorhergehenden Ansprüche,
**dadurch gekennzeichnet,**
**daß** der erste Schaltungsteil (MPC) und der zweite Schaltungsteil (EBOR) in nicht ineinander verschachtelten Bereichen eines die integrierte Schaltung enthaltenden Halbleiter-Chips (C) vorgesehen sind.

5. Integrierte Schaltung nach einem der vorhergehenden Ansprüche,
**dadurch gekennzeichnet,**
**daß** der erste Schaltungsteil (MPC) und der zweite Schaltungsteil (EBOR) in nebeneinander liegenden Bereichen eines die integrierte Schaltung enthaltenden Halbleiter-Chips (C) vorgesehen sind.

6. Integrierte Schaltung nach einem der vorhergehenden Ansprüche,
**dadurch gekennzeichnet,**
**daß** die integrierte Schaltung Kontaktstellen (P) enthält, über welche der erste Schaltungsteil (MPC) mit anderen Komponenten eines die integrierte Schaltung enthaltenden Systems verbindbar ist, und daß diese Kontaktstellen innerhalb des vom ersten Schaltungsteil belegten Bereiches der integrierten Schaltung angeordnet sind.

## Claims

1. Integrated circuit having a first circuit part (MPC) and a second circuit part (EBOR) which is required or useful for emulating the first circuit part, and a module which contains the integrated circuit,
**characterized in that**
the second circuit part (EBOR) does not have any contact points which are connected to input and/or output connections of the integrated circuit, in which case possibly required communication between the second circuit part (EBOR) and devices provided outside the module is carried out via the first circuit part (MPC).

2. Integrated circuit according to Claim 1,
**characterized in that**
the second circuit part (EBOR) is arranged inside the integrated circuit in such a manner that said second circuit part can be omitted by covering the corresponding part of exposure masks (BM) used to produce the integrated circuit.

3. Integrated circuit according to one of the preceding claims,
**characterized in that**
the first circuit part (MPC) and the second circuit part (EBOR) are provided in regions of a semiconductor chip (C) containing the integrated circuit which do not overlap one another.

4. Integrated circuit according to one of the preceding claims,
**characterized in that**
the first circuit part (MPC) and the second circuit part (EBOR) are provided in regions of a semiconductor chip (C) containing the integrated circuit which are not interleaved in one another.

5. Integrated circuit according to one of the preceding claims,
**characterized in that**
the first circuit part (MPC) and the second circuit part (EBOR) are provided in regions of a semiconductor chip (C) containing the integrated circuit which are beside one another.

6. Integrated circuit according to one of the preceding claims,
**characterized in that**
the integrated circuit contains contact points (P) which can be used to connect the first circuit part (MPC) to other components of a system containing the integrated circuit, and **in that** these contact points are arranged inside that region of the integrated circuit which is occupied by the first circuit part.

## Revendications

1. Circuit intégré présentant une première partie de circuit (MPC) et une deuxième partie de circuit (EBOR) nécessaire pour simuler la première partie de circuit ou contribuant à cette simulation, ainsi que module contenant le circuit intégré,
**caractérisé en ce que**
la deuxième partie de circuit (EBOR) ne présente aucun emplacement de contact raccordé à des bornes de raccordement d'entrée ou de sortie du circuit intégré et
**en ce que** la communication éventuellement nécessaire entre la deuxième partie de circuit (EBOR) et des dispositifs prévus à l'extérieur du module s'effectue par l'intermédiaire de la première partie de circuit (MPC).

2. Circuit intégré selon la revendication 1, **caractérisé en ce que** la deuxième partie de circuit (EBOR) est disposée à l'intérieur du circuit intégré de telle sorte qu'elle peut être omise en découvrant la partie correspondante de masques d'éclairage (BM) utilisés pour la fabrication du circuit intégré.

3. Circuit intégré selon l'une des revendications précédentes, **caractérisé en ce que** la première partie de circuit (MPC) et la deuxième partie de circuit (EBOR) sont prévues dans des parties non superposées l'une sur l'autre d'une puce semi-conductrice (C) qui contient le circuit intégré.

4. Circuit intégré selon l'une des revendications précédentes, **caractérisé en ce que** la première partie de circuit (MPC) et la deuxième partie de circuit (EBOR) sont prévues dans des parties non emboîtées l'une dans l'autre d'une puce semi-conductrice (C) qui contient le circuit intégré.

5. Circuit intégré selon l'une des revendications précédentes, **caractérisé en ce que** la première partie de circuit (MPC) et la deuxième partie de circuit (EBOR) sont prévues dans des parties situées l'une à côté de l'autre d'une puce semi-conductrice (C) qui contient le circuit intégré.

6. Circuit intégré selon l'une des revendications précédentes, **caractérisé en ce que** le circuit intégré contient des emplacements de contact (P) par lesquels la première partie de circuit (MPC) peut être raccordée à d'autres composants d'un système qui contient le circuit intégré et **en ce que** ces emplacements de contact sont disposés à l'intérieur de la partie du circuit intégré occupée par la première partie de circuit.
